# EUROPÄISCHE PATENTSCHRIFT

(11) **EP 1 340 191 B1**
(45) Veröffentlichungstag und Bekanntmachung des Hinweises auf die Patenterteilung: **27.10.2004**
(21) Anmeldenummer: 01994587.2
(22) Anmeldetag: 21.11.2001
(51) Int. Cl.: G06K 19/073, G05F 1/56, H02P 9/30, H02M 3/156

(54) **SPANNUNGSREGLERSCHALTUNG FÜR CHIPKARTEN-ICS**
VOLTAGE REGULATOR CIRCUIT FOR CHIPCARD ICS
CIRCUIT REGULATEUR DE TENSION POUR CIRCUITS INTEGRES DE CARTES A PUCE

(30) Priorität: 06.12.2000 DE 10060651
(43) Veröffentlichungstag der Anmeldung: 03.09.2003
(73) Patentinhaber: Infineon Technologies AG, 81669 München (DE)
(72) Erfinder: WEDER, Uwe, 84072 Au/Hallertau (DE)
(74) Vertreter: Epping Hermann & Fischer
(86) Internationale Anmeldenummer: PCT/DE2001/004366
(87) Internationale Veröffentlichungsnummer: WO 2002/047025

(56) Entgegenhaltungen:
- EP-A- 0 864 956
- WO-A-00/63827
- US-A- 6 046 577

## Beschreibung

Die vorliegende Erfindung betrifft eine Spannungsreglerschaltung auf dem Gebiet des Chipkarten-IC-Designs.

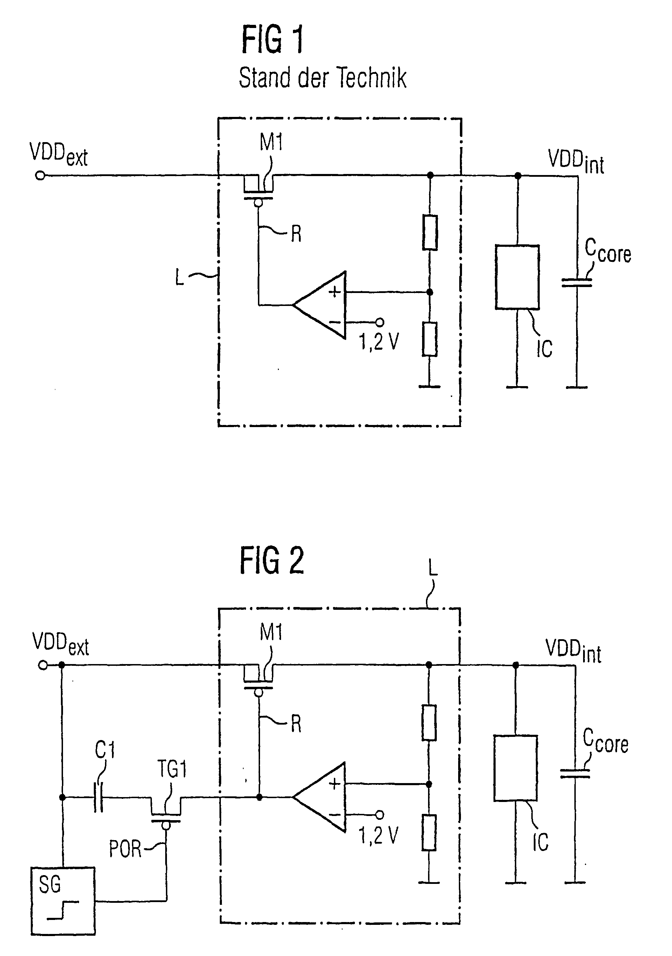

Integrierte Schaltungen mit unterschiedlichen Spannungsdomänen (externe und interne Spannungen) enthalten üblicherweise Spannungsreglerschaltungen, z. B. wie auf S. 10 der Schrift LP2954/LP2954A 5V and Adjustable Micropower Low-Dropout Voltage Regulators der National Semiconductor Corporation vom Juni 1999 wiedergegeben. Die Betriebsspannung für die integrierte Schaltung ist die Potenzialdifferenz zwischen dem Masseanschluss (VSS) und dem Versorgungspotenzial. Diese im Folgenden als interne Versorgungsspannung VDDᵢₙₜ bezeichnete Spannung wird aus einer externen Versorgungsspannung VDDₑₓₜ mittels einer komplexen Spannungsreglerschaltung erzeugt, die durch einen Längsregler gebildet ist. Zur Vereinfachung der Erläuterungen wird der Längsregler in der zum Stand der Technik angegebenen Spannungsreglerschaltung der Figur 1 in einem Schaltungsschema wiedergegeben, das die wesentliche Funktionsweise dieser Schaltung in der Ansteuerung eines Längsregeltransistors darstellt. Ein ähnlicher Regler ist in der EP-A-864956 offenbart.

Die in der Figur 1 dargestellte Schaltung umfasst einen Längsregler L, der einen Längsregeltransistor aufweist und die externe Versorgungsspannung VDDₑₓₜ in die interne Versorgungsspannung VDDᵢₙₜ umsetzt. An den Gate-Anschluss des Längsregeltransistors M1 als Regleranschluss R des Längsreglers wird ein zur Steuerung der Spannungsumsetzung vorgesehenes elektrisches Potenzial angelegt. Dieses Signal ist ein reglerinternes analoges Signal. Die interne Versorgungsspannung VDDᵢₙₜ ist zur Spannungsversorgung des Chipkarten-ICs IC vorgesehen. Die Core-Kapazität C_{core} ist zur Erläuterung der Funktion der Schaltung mit eingezeichnet. Die Schaltung des Längsreglers ist üblicherweise wesentlich komplexer und weicht von dem dargestellten einfachen Beispiel bei gleichem Funktionsprinzip ab. Eine entsprechende Schaltung offenbart auch WO 00/63827, die Ansprüche sind gegen diese Veröffentlichung abgegrenzt.

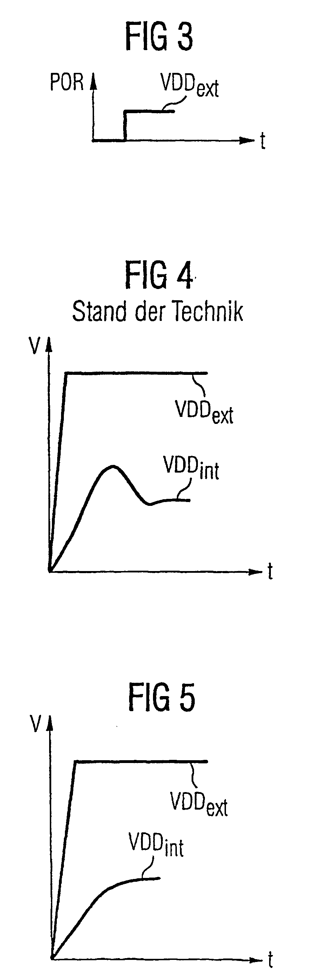

Die in der Figur 1 dargestellte Spannungsreglerschaltung hat den Nachteil, dass beim schnellen Einschalten der externen Versorgungsspannung VDDₑₓₜ Überschwinger der internen Versorgungsspannung VDDᵢₙₜ auftreten, die ab einem gewissen Integrationsniveau nicht mehr tolerierbar sind, da sie zu einer Schädigung des dünnen Gateoxids der mit VDDᵢₙₜ verbundenen Transistoren führen. In der Figur 4 sind die Spannungsverläufe von VDDᵢₙₜ und VDDₑₓₜ über der Zeit für den Einschaltvorgang aufgetragen.

Außerdem ist für Chipkarten-ICs die Anzahl von lediglich fünf Anschlusskontaktflächen, üblicherweise als Pads bezeichnet, (VDDₑₓₜ, VSS, Clock, IO, Reset) und deren der ISO/GSM-Norm entsprechende Einschaltsequenz vorgegeben. Daher gibt es keine Möglichkeit, durch Vorsehen zusätzlicher Pads oder anderer Einschaltsequenzen ein gewünschtes Einschwingverhalten zu erzielen.

Aufgabe der vorliegenden Erfindung ist es, eine möglichst einfache Spannungsreglerschaltung für Chipkarten-ICs anzugeben, bei der das Problem des Überschwingens beim Einschaltvorgang nicht auftritt.

Diese Aufgabe wird mit der Spannungsreglerschaltung mit den Merkmalen des Anspruches 1 gelöst. Ausgestaltungen ergeben sich aus den abhängigen Ansprüchen.

Die erfindungsgemäße Spannungsreglerschaltung ist mit einem an sich bekannten Längsregler versehen, der zur Erzeugung einer internen Versorgungsspannung VDDᵢₙₜ aus einer externen Versorgungsspannung VDDₑₓₜ vorgesehen ist, wobei zwischen einem Anschuss der externen Versorgungsspannung VDDₑₓₜ und einem Regleranschluss des Längsreglers eine Kapazität und ein als Transfer-Gate vorgesehener Feldeffekttransistor in Reihe geschaltet sind. Für dieses Transfer-Gate ist ein entsprechend einem Steuersignal eines Chipkarten-ICs veränderliches elektrisches Potenzial vorgesehen. Der Längsregler umfasst insbesondere einen Längsregeltransistor, der mit Source und Drain in Reihe zwischen der externen Versorgungsspannung VDDₑₓₜ und der internen Versorgungsspannung VDDᵢₙₜ angeordnet ist und dessen Gate-Anschluss der Regleranschluss des Längsreglers ist oder zumindest zu dem Regleranschluss geführt ist. Das am Gate anliegende Potenzial des Längsregeltransistors ist regelbar.

Die zur Erläuterung der Erfindung beigefügten Figuren zeigen:
Figur 1 die eingangs erläuterte Spannungsreglerschaltung aus dem Stand der Technik;
Figur 2 die bevorzugte Ausführungsform einer erfindungsgemäßen Spannungsreglerschaltung;
Figur 3 ein Diagramm des POR-Signales;
Figur 4 ein Diagramm für VDDᵢₙₜ und VDDₑₓₜ für die Schaltung gemäß Figur 1;
Figur 5 ein Diagramm entsprechend Figur 4 für die in Figur 2 dargestellte Schaltung.

In Figur 2 ist ein Ausführungsbeispiel der erfindungsgemäßen Spannungsreglerschaltung dargestellt, bei dem der Längsregler L zur Erläuterung der Funktionsweise der Schaltung wie in der Figur 1 dargestellt ist. Abwandlungen des Längsreglers ergeben entsprechende Ausführungsbeispiele der erfindungsgemäßen Schaltung, die nicht eigens beschrieben zu werden brauchen. Zwischen Source und Gate des Längsregeltransistors M1, dessen Source-Drain-Strecke zur Spannungsumsetzung genutzt wird, sind eine Kapazität C1 und ein Transfer-Gate TG1, das durch einen Feldeffekttransistor gebildet ist, in Reihe geschaltet. Die übrigen Schaltungskomponenten entsprechen einer herkömmlichen Schaltung, zum Beispiel gemäß Figur 1.

Die Ansteuerung des Transfer-Gates erfolgt mit einem Signal, das von einem dafür vorgesehenen Signalgenerator SG als POR(Power-On Reset)-Signal erzeugt wird und typisch einen in dem Diagramm der Figur 3 dargestellten zeitlichen Verlauf aufweist. Dieses POR-Signal ist ein digitales Signal und besitzt zwei Werte, nämlich das Massepotenzial oder VSS und die externe Versorgungsspannung VDDₑₓₜ. Es wird unabhängig von dem erfindungsgemäß vorgesehenen Schaltungsteil bei einem Chipkarten-IC erzeugt und für einen Einschaltvorgang verwendet.

Im Moment des Einschaltens ist die Kapazität C1 entladen. Wenn die externe Versorgungsspannung VDDₑₓₜ angelegt wird, öffnet bei durchgeschaltetem Transfer-Gate der Längsregeltransistor M1 entsprechend der jetzt erfolgenden Aufladung der Kapazität Cl. Da dieses Aufladen eine gewisse Zeit in Anspruch nimmt, wird so der Längsregler L nur langsam geöffnet. Die erfindungsgemäßen Schaltungselemente C1 und TG1 sind als erfindungswesentliche Komponenten unabhängig von der genauen Ausgestaltung des Längsreglers vorhanden. Sie werden vorzugsweise mit einer Zeitkonstante dimensioniert, die größer als die (interne) Spannungsreglerzeitkonstante ist. Damit wird erreicht, dass auch die (interne) Core-Kapazität C_{core} nur langsam aufgeladen wird, wodurch ein Überschwingen der internen Versorgungsspannung VDDᵢₙₜ vermieden wird. Bei dieser Schaltung entsprechen die zeitlichen Spannungsverläufe daher den in dem Diagramm der Figur 5 dargestellten Kurven.

Nach Beendigung des internen Einschwingvorganges wird das Transfer-Gate durch das Signal POR permanent geschlossen. Da die zusätzliche Kapazität C1 nur an der externen Versorgungsspannung VDDₑₓₜ hängt und das Transfer-Gate während des gesamten Betriebes geschlossen bleibt, wird das dynamische Verhalten des Chipkarten-ICs IC durch die Spannungsreglerschaltung nicht beeinflusst. Auch die statische und dynamische Stromaufnahme im Betrieb bleibt unbeeinflusst. Die Reduzierung der auftretenden Spitzenstromstärke besitzt den Vorteil einer verminderten Elektromigration.

### Bezugszeichenliste

- C1: Kapazität
- C_{core}: Core-Kapazität
- IC: integrierte Schaltung
- L: Längsregler
- M1: Längsregeltransistor
- POR: Signal
- R: Regleranschluss
- SG: Signalgenerator
- TG1: Transfer-Gate
- VDDₑₓₜ: externe Versorgungsspannung
- VDDᵢₙₜ: interne Versorgungsspannung

## Patentansprüche

1. Spannungsreglerschaltung für Chipkarten-ICs
mit einer als Längsregler (L) vorgesehenen Schaltung zur Erzeugung einer internen Versorgungsspannung (VDDᵢₙₜ) aus einer externen Versorgungsspannung (VDDₑₓₜ),
bei der der Längsregler (L)
einen Längsregeltransistor (M1), der mit Source und Drain in Reihe zwischen der externen Versorgungsspannung (VDDₑₓₜ) und der internen Versorgungsspannung (VDDᵢₙₜ) angeordnet ist, und einen Regleranschluss (R), der dafür vorgesehen ist, das an einem Gate-Anschluss des Längsregeltransistors (M1) anliegende Potenzial zu regeln, umfasst,
**dadurch gekennzeichnet, dass**
zwischen einem Anschluss der externen Versorgungsspannung (VDDₑₓₜ) und dem Regleranschluss (R) eine Kapazität (C1) und ein als Transfer-Gate (TG1) vorgesehener Feldeffekttransistor in Reihe geschaltet sind und
dieses Transfer-Gate (TG1) dafür vorgesehen ist, durch Anlegen eines ersten elektrischen Potenziales während eines Einschwingvorganges der Schaltung eine elektrisch leitende Verbindung zwischen der Kapazität (C1) und dem Längsregeltransistor (M1) herzustellen, die bewirkt, dass der Längsregler (L) infolge einer Aufladung der Kapazität (C1) den Anschluss der externen Versorgungsspannung (VDDₑₓₜ) langsam mit einem Anschluss der internen Versorgungsspannung (VDDᵢₙₜ) verbindet, und durch Anlegen eines zweiten elektrischen Potenziales nach Beendigung des Einschwingvorganges die elektrisch leitende Verbindung zwischen der Kapazität (C1) und dem Längsregeltransistor (M1) permanent zu unterbrechen.

2. Spannungsreglerschaltung nach Anspruch 1, bei der
der Anschluss des Transfer-Gates (TG1) mit einem Schaltungsteil verbunden ist, der ein Spannungssignal liefert, das zeitlich aufeinanderfolgend zwei verschiedene Werte annimmt.

3. Spannungsreglerschaltung nach Anspruch 2, bei der
das zweistufige Spannungssignal ein einem Steuersignal eines Chipkarten-ICs entsprechendes Power-On/Reset-Signal ist.

## Claims

1. Voltage regulator circuit for smart card ICs having a circuit, which is in the form of a series regulator (L), for producing an internal supply voltage (VDDᵢₙₜ) from an external supply voltage (VDDₑₓₜ),
in which the series regulator (L) has
a series regulation transistor (M1), which is arranged with its source and drain in series between the external supply voltage (VDDₑₓₜ) and the internal supply voltage (VDDᵢₙₜ), and
a regulator connection (R), which is provided in order to regulate the potential which is applied to a gate connection of the series regulation transistor (M1),
**characterized in that** a capacitance (C1) and a field-effect transistor, which is provided as a transfer gate (TG1), are connected in series between one connection of the external supply voltage (VDDₑₓₜ) and the regulator connection (R), and
this transfer gate (TG1) is intended for the purpose of producing an electrically conductive connection between the capacitance (C1) and the series regulation transistor (M1) by application of a first electrical potential during a transient process in the circuit, with the effect that the series regulator (L) slowly connects the connection of the external supply voltage (VDDₑₓₜ) to one connection of the internal supply voltage (VDDᵢₙₜ) as a consequence of the charging of the capacitance (C1), and of permanently interrupting the electrically conductive connection between the capacitance (C1) and the series regulation transistor (M1) by application of a second electrical potential after the end of the transient process.

2. Voltage regulator circuit according to Claim 1, in which the connection of the transfer gate (TG1) is connected to a circuit part which produces a voltage signal which assumes two different values successively in time.

3. Voltage regulator circuit according to Claim 2, in which the two-stage voltage signal is a power on/reset signal which corresponds to a control signal for a smart card IC.

## Revendications

1. Circuit régulateur de tension pour circuits intégrés de cartes à puce
comprenant un circuit prévu comme régulateur (L) de longueur, de production d'une tension (VDDᵢₙₜ) interne d'alimentation à partir d'une tension (VDDₑₓₜ) externe d'alimentation,
dans lequel le régulateur (L) de longueur
comprend un transistor (M1) régulateur de longueur, qui est disposé avec source et drain en série entre la tension (VDDₑₓₜ) externe d'alimentation et la tension (VDDᵢₙₜ) interne d'alimentation, et une borne (R) de régulateur qui est prévue pour réguler le potentiel s'appliquant à une borne de grille du transistor (M1) régulateur de longueur,
**caractérisé en ce qu'**il est monté en série entre une borne de la tension (VDDₑₓₜ) externe d'alimentation et la borne (R) de régulateur une capacité (C1) et un transistor à effet de champ prévu comme grille (TG1) de transfert et
cette grille (TG1) de transfert est prévue pour que, par application d'un premier potentiel électrique pendant un régime transitoire du circuit, il soit ménagé une liaison conductrice de l'électricité entre la capacité (C1) et le transistor (M1) régulateur de longueur, qui fait que le régulateur (L) de longueur à la suite d'une charge de la capacité (C1) relie la borne de la tension (VDDₑₓₜ) externe d'alimentation lentement à une borne de la tension (VDDᵢₙₜ) interne d'alimentation et, par application d'un deuxième potentiel électrique après que le régime transitoire est achevé, interrompe de manière permanente la liaison conductrice d'électricité entre la capacité (C1) et le transistor (M1) régulateur de longueur.

2. Circuit régulateur de tension suivant la revendication 1, dans lequel la borne de la grille (TG1) de transfert est reliée à une partie du circuit, qui fournit un signal de tension, qui prend successivement dans le temps deux valeurs différentes.

3. Circuit régulateur de tension suivant la revendication 2, dans lequel le signal de tension en deux paliers est un signal Power-On/Reset correspondant à un signal de commande d'un circuit intégré de carte à puce.
